# FASCICULE DE BREVET EUROPEEN

(11) **EP 2 212 663 B1**
(45) Date de publication et mention de la délivrance du brevet: **07.08.2013**
(21) Numéro de dépôt: 08852429.3
(22) Date de dépôt: 20.11.2008
(51) Int. Cl.: G01K 1/14, G01K 13/00

(54) **PROCEDE DE MESURE DE LA TEMPERATURE SURFACIQUE INTERNE D'UN TUBE ET DISPOSITIF ASSOCIE**
VERFAHREN ZUR MESSUNG DER INNENFLÄCHENTEMPERATUR EINES ROHRS UND ENTSPRECHENDES VERFAHREN
METHOD OF MEASURING THE INTERNAL SURFACE TEMPERATURE OF A PIPE AND ASSOCIATED DEVICE

(30) Priorité: 23.11.2007 FR 0759267
(43) Date de publication de la demande: 04.08.2010
(73) Titulaire: Commissariat à l'Énergie Atomique et aux Énergies Alternatives, 75015 Paris (FR)
(72) Inventeur: CUBIZOLLES, Géraud, F-38000 Grenoble (FR)
(74) Mandataire: Ilgart, Jean-Christophe
(86) Numéro de dépôt international: PCT/EP2008/065941
(87) Numéro de publication internationale: WO 2009/065908

(56) Documents cités:
- FR-A- 2 514 896
- US-A- 4 671 675
- R.A. FORTMAN, ET AL.: "Heat transfer studies with candu fuel simulators" 5TH INTERNATIONAL CONFERENCE ON NUCLEAR ENGINEERING ICONE5, 26 mai 1997 (1997-05-26), - 30 mai 1997 (1997-05-30) XP008094298 Nice France cité dans la demande

## Description

### DOMAINE TECHNIQUE ET ART ANTÉRIEUR

L'invention se rapporte à un nouveau procédé de mesure de la surface interne d'un tube et à un dispositif associé.

Le nouveau procédé permet de mesurer la température sur la surface interne d'un tube en maîtrisant la pression de contact entre les éléments sensibles et ladite surface. Ainsi, grâce au procédé selon l'invention, et selon les cas envisagés, il est possible d'accéder au champ de température discrétisé en espace (cas d'un essai stationnaire) si la sonde selon l'invention est déplacée, ou à la cinétique d'évolution de la température sur le nombre de point(s) correspondant au nombre de zone(s) sensible(s) présente(s) sur la sonde selon l'invention.

L'obtention du champ de température sur la surface interne d'un tube constitue une information d'importance dans les études expérimentales en thermo-hydraulique. En effet, sa connaissance précise conduit à l'estimation fine du coefficient d'échange, à la détection des régions de changement de phase (condensation, vaporisation), à la localisation de zone de transfert thermique altéré ou modifié. Or, obtenir une mesure de température de surface dans un milieu confiné, comme la surface interne d'un tube, est particulièrement difficile et l'expérimentateur doit souvent se limiter à une information partielle et figée.

Actuellement, l'information sur la température est obtenue à l'aide de sondes mobiles à thermocouples plaqués contre la paroi interne de tube par un ressort. L'effort exercé varie par conséquent avec la position de la mesure.

De la publication intitulée « Heat Transfer Studies With Candu Fuels Simulators » publiée sous le numéro 2428, à l'occasion de la conférence tenue lors du « 5th International Conference on Nuclear Engineering ICONCE5 » ayant eu lieu du 26 au 30 Mai 1997, il est connu une sonde comprenant des éléments sensibles à la température, réalisés en Inconel®, sous forme de gaines. La flexibilité naturelle de ces éléments sensibles leur permet d'agir comme des ressorts et ainsi, d'être chacun en contact avec la surface interne de tube dont on cherche à connaître la température. Cependant, cette sonde ne permet pas de maitriser l'effort de contact entre les éléments sensibles et la surface interne du tube, puisqu'il dépend uniquement de la flexibilité naturelle de ces derniers. Du document FR Z 514 896, il est connu une sonde introductible dans des tubes. La sonde comprend le corps de la sonde, qui est creux et qui présente deux orifices par où entre et sort un fluide, et un piston s'areboutant contre la paroi interne du tube quand ledit fluide est mis en pression.

C'est pourquoi, un but de la présente invention est de réduire et d'uniformiser l'incertitude due à la différence de résistance de contact sur l'ensemble de la surface de mesure.

Un autre but de l'invention est de réduire l'usure de la zone de contact d'élément(s) sensible(s) d'une sonde utilisée pour la mesure lors des déplacements à l'intérieur d'un même tube et donc d'allonger la durée de vie de la sonde.

### EXPOSÉ DE L'INVENTION

Pour ce faire, l'invention a pour objet un procédé de mesure de la température de la surface interne de tube, dans lequel on réalise les étapes suivantes :
a) on vient écarter au moins un élément sensible à la température, d'une sonde, radialement à son axe de révolution (XX'), de manière à le(s) mettre en contact contre la surface interne du tube,
b) on augmente l'effort de contact appliqué entre l'(les) élément(s) sensible(s) de la sonde et la surface interne jusqu'à ce qu'il atteigne une valeur déterminée en tout point de ladite surface, l'effort de contact étant constant et reproductible, quel que soit le point de la surface interne S sur lequel on cherche à effectuer une mesure de température.

Par « élément(s) sensible(s) à la température» d'une sonde, il faut comprendre ici et dans le cadre de l'invention, la(les) partie(s) de la sonde dont le matériau constitutif possède une propriété variable avec la température (résistance électrique, force électromotrice ...) à laquelle elle(s) est (sont) soumise(s) par contact.

Ainsi il peut s'agir de partie(s) d'un thermomètre à résistance de platine, d'une thermistance constituée d'un matériau semi-conducteur, de thermocouples...

Selon l'invention, on déplace sur la surface à mesurer un (des) thermomètre(s) miniaturisé(s). Ce (s) thermomètre(s) (thermocouple(s), sonde à résistance de platine, thermistance(s)) est (sont) solidarisé(s) par une sonde et relié(s) à la surface interne du tube soit directement, soit par un élément de contact spécifique dont l'inertie thermique est limitée, en contrôlant l'effort de contact et, par conséquent, la résistance thermique de contact. Le matériau employé pour fabriquer cet élément de contact doit posséder une conductivité thermique aussi élevée que possible afin de réduire les temps de stabilisation en température de la sonde. Dans le cas de sondes utilisées sous potentiel électrique, le matériau doit en outre être isolant électriquement. De préférence, il peut s'agir de diamant. Il peut également s'agir de nitrure d'aluminium ou le nitrure de bore.

La possibilité de déplacer l'instrument de mesure permet de capter une information plus complète et/ou mieux localisée. La maîtrise de l'effort de contact conduit à l'atténuation de la résistance thermique de contact et, par conséquent, à la réduction de l'incertitude de mesure. La suppression du contact contre le tube mesuré au cours du déplacement annule les effets du frottement sur l'usure des éléments de contact et du tube, limitant, de ce fait, l'évolution dans le temps de la résistance thermique et l'altération de la surface de mesure.

Selon l'invention, on pilote la pression de contact de l'(des) élément(s) sensible(s) sur le cylindre dont le champ de température est mesuré. L'invention peut être adaptée à tout diamètre de tube, à toute condition de température accessible à la mesure par thermocouple, sonde à résistance de platine ou thermistance, en adaptant les matériaux choisis pour la réalisation du bâti de la sonde.

Le gain principal concerne la reproductibilité des mesures de température d'un point à un autre de la surface par uniformisation de la résistance de contact, d'une part, et dans le temps, d'autre part, grâce à la réduction de l'usure (le contact sonde/paroi étant supprimé lors des phases de déplacement à l'intérieur du tube).

De préférence, lorsqu'on déplace la sonde à l'intérieur du tube, on relâche l'effort appliqué par l'(es) élément(s) sensible(s) contre la surface interne du tube. Avantageusement, le relâchement de l'effort appliqué est tel qu'il ne subsiste aucun contact entre l'(es) élément(s) sensible(s) de la sonde et la surface interne du tube.

L'invention concerne également un dispositif de mesure de la température de la surface interne d'un tube, comprenant :
- une sonde d'axe de révolution comprenant au moins un élément sensible à la température avec une extrémité libre qui s'étend parallèlement à un axe longitudinal ;
- des moyens pour écarter radialement à l'axe l'extrémité libre de l' (des) élément(s) sensible(s),
- des moyens pour appliquer un effort déterminé sur l'extrémité libre de l' (des) élément(s) sensible(s) écarté(s) radialement, l'effort de contact étant constant et reproductible, quel que soit le point de la surface interne S sur lequel on cherche à effectuer une mesure de température.

Selon un mode de réalisation préféré, le dispositif comprend une pluralité d'éléments sensibles distants entre eux et avec, pour chacun, leur extrémité libre parallèle à l'axe.

La sonde comprend de préférence un corps creux et les éléments sensibles sont de préférence sous la forme d'une pluralité de fils métalliques flexibles. Chacun de ces éléments a une extrémité fixée dans le corps creux et l'autre extrémité est libre et recourbée vers l'extérieur.

Selon un mode de réalisation avantageux, les moyens d'écartement des fils métalliques flexibles et d'application d'effort déterminé à leur extrémité libre comprennent :
● une plaque de largeur L, formant piston à travers lequel passent les fils,
● un soufflet fixé au piston et au corps creux en formant avec ceux-ci une enceinte étanche adaptée pour être en communication avec un dispositif de pressurisation,
● des languettes flexibles, avec pour chacune, une extrémité fixée au corps creux de manière à être distantes entre elles d'une distance L, et une extrémité libre solidaire extérieurement de l'extrémité libre d'un fil et intérieurement d'une butée. Ainsi, selon l'invention, pour effectuer les phases de mesure, le dispositif de pressurisation met en pression l'enceinte étanche à une pression prédéterminée. Cela provoque le déplacement axial du piston fixé au soufflet et ainsi, l'écartement radial concomitant des extrémités libres des languettes et de celles des fils jusqu'à une position correspondant à la mise en butée du piston sur la butée. Puis, cela provoque l'augmentation des efforts appliqués au piston qui est transmise aux extrémités libres des fils, par l'intermédiaire de la butée et la partie extérieure des languettes qui en est solidaire jusqu'à ce que la pression prédéterminée soit atteinte.

Avantageusement, la plaque formant piston et la butée sont de formes tronconiques complémentaires.

Selon une variante, le dispositif comprend une masselotte comprenant un évidement dans lequel est logée l'extrémité libre d'un élément sensible, le matériau de la masselotte assurant la continuité thermique entre une pièce en contact extérieur avec elle et l'élément sensible. Le matériau de la masselotte assure en outre de préférence l'isolation électrique entre la pièce et l'élément sensible.

L'invention a trait enfin à l'utilisation d'un dispositif décrit ci-dessus pour mesurer la température de surface interne de tubes d'installation expérimentale simulant par effet joule direct le dégagement de puissance des crayons combustibles nucléaires. Ces tubes d'installation expérimentale, par exemple réalisés en Inconel® ont les mêmes caractéristiques dimensionnelles que celles des gaines de crayons de combustibles nucléaires.

De manière générale, toutes les applications de thermométrie dans des tubes dont la surface interne est accessible peuvent être envisagées grâce à l'invention.

### BRÈVE DESCRIPTION DES DESSINS

D'autres caractéristiques et avantages de l'invention ressortiront mieux à la lecture de la description détaillée faite en références aux figures suivantes dans lesquelles :
- la figure 1 est une représentation schématique en coupe longitudinale de la partie sonde d'un mode de réalisation du dispositif de mesure de température selon l'invention,
- les figures 2A et 2B sont respectivement des vues en coupe longitudinale et en perspective de la partie sonde d'un mode de réalisation du dispositif de mesure de température selon l'invention.

### EXPOSÉ DÉTAILLÉ DE MODES DE RÉALISATION PARTICULIERS

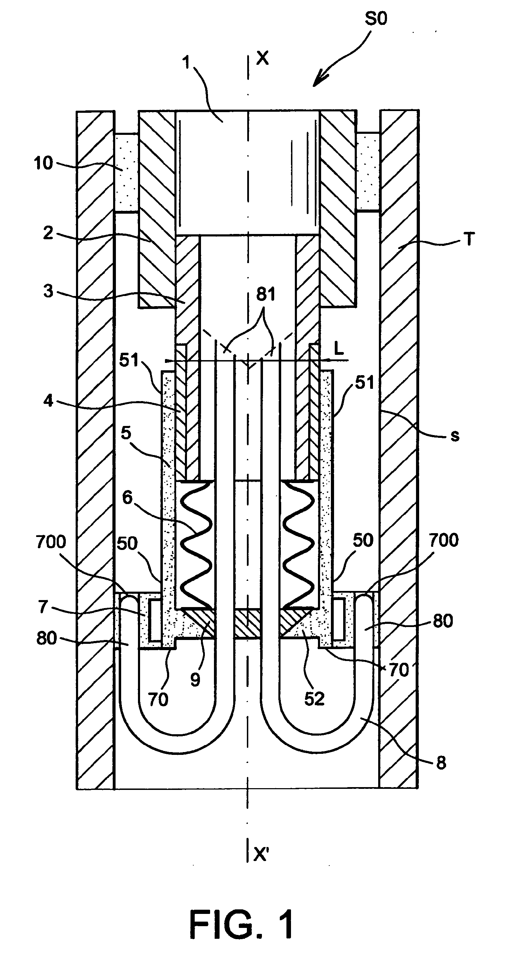

Sur la figure 1, est représentée, en coupe longitudinale, une sonde So selon l'invention introduite en position verticale dans un tube T et pourvue de trois éléments sensibles disposés à pas angulaire régulier de 120°. Le tube T représenté est un simulateur de crayon de combustible nucléaire : il peut être chauffant ou non.

La sonde So d'axe de révolution XX' comprend principalement un corps creux 1, 2, 3, des éléments sensibles à la température 8 et une tête de mesure 4, 5, 6, 7, 9.

Une bague isolante 10, thermiquement et/ou électriquement, est prévue dans le mode de réalisation illustré. Cette bague isolante 10 protège le corps 1 de tout contact avec la surface interne S du tube T lors de son introduction et de son déplacement à l'intérieur de ce dernier. La sonde So a également pour fonction d'éviter un court circuit (si le tube T est à un potentiel électrique), et de limiter les fuites thermiques du tube T vers la sonde So.

Le corps creux 1 de la sonde So est, dans le mode de réalisation illustré, constitué en deux parties, à savoir un corps principal 2 et un corps secondaire 3 sous la forme d'un cylindre fixé de manière étanche à l'intérieur du corps principal.

Tel qu'illustré, le corps principal 2 est un tube qui assure simultanément les fonctions de :
- transmission du mouvement depuis un dispositif de déplacement non représenté,
- guidage de retour des éléments sensibles à la température 8 décrits ci-après,
- création d'un volume de pressurisation à l'intérieur de la sonde.

Tel qu'illustré, le corps secondaire 3 est un cylindre fixé de manière étanche à l'intérieur du corps principal 2. Ce corps secondaire 3 assure simultanément les fonctions de :
- réduction de l'encombrement du corps principal 2 de sonde So afin de fixer les languettes de plaquage 5 décrites ci-après,
- le dégagement d'un espace suffisant pour la mise en place d'une masselotte de contact 7 décrite ci-après,
- la mise en place d'une surface de référence pour la fixation étanche d'un soufflet d'appui 6 décrit ci-après.

Le corps creux 1 est raccordé dans sa partie inférieure à la tête de mesure 4, 5, 6, 7, 9 décrite ci-après, et dans sa partie supérieure à un dispositif de pressurisation non représenté.

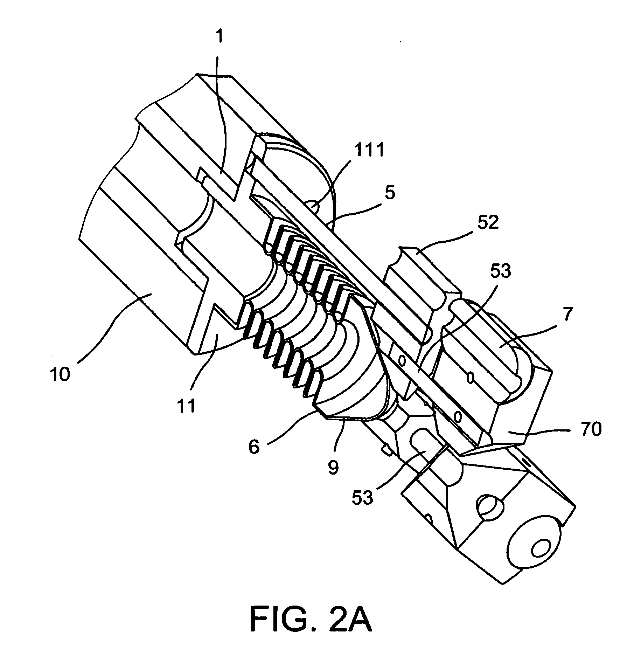

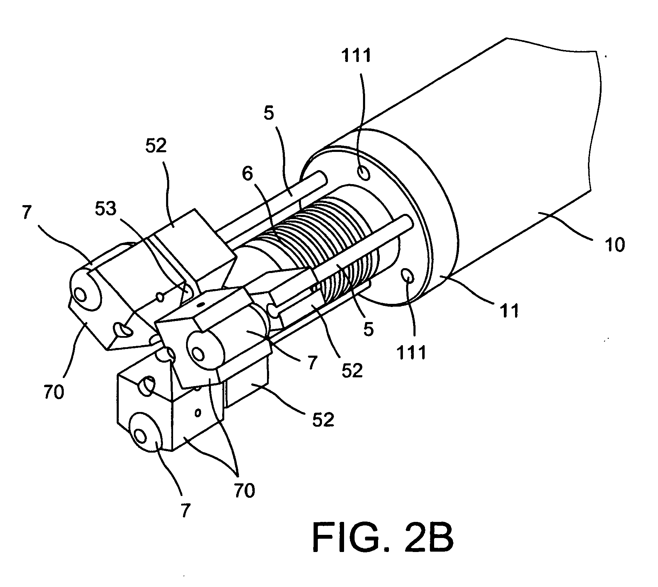

La partie formant tête de mesure comprend tout d'abord une couronne de positionnement 4. Tel qu'illustré, la couronne est un cylindre 4 fixé et centré sur le corps secondaire 3. Des languettes de plaquage 5 sont fixées sur la couronne 4. Pour chaque élément sensible 8, la position doit être connue avec la meilleure précision possible. En effet, la mesure visée est celle d'un champ surfacique de température il faut donc maîtriser trois mesures : la température, mais encore la position axiale (par rapport à une référence donnée sur le tube instrumenté à inspecter) et la position angulaire (par rapport à une génératrice particulière du tube instrumenté à inspecter). Le positionnement des masselottes, à l'aide des languettes de plaquage 5, est en conséquence un paramètre d'importance. Le positionnement angulaire est donné par :
- le diamètre externe de la bague 4 dans le mode de réalisation de la figure 1,
- les trous 111 réalisés dans la bague 11 dans le mode de réalisation des figures 2A et 2B.

Les languettes de plaquage 5 sont constituées chacune par une lame flexible élastiquement déformable fixée sur la couronne de positionnement 4. Leur rôle est, d'une part, de transmettre l'effort d'appui du piston 9 vers la masselotte de contact 7 lors des phases de mesure, et, d'autre part, de ramener la masselotte de contact dans l'espace central du tube T lors des phases de déplacement de la sonde So sans qu'il y ait contact entre l'extérieur des masselottes 7 et l'intérieur du tube T. Les languettes 5 sont distantes entre elles d'un angle de 120° (figure 1 et figures 2A et 2B).

Comme décrit ci-après, la transmission de l'effort est assurée au moyen d'une butée 52 sur laquelle le piston 9 est en appui et d'un siège 70 de la masselotte de contact 7.

La tête de mesure comprend également un soufflet 6 qui constitue l'élément déformable de l'enceinte étanche formée par le corps creux 2, 3, et le piston 9 décrit ci-après. Lors des phases de mesure, cette enceinte étanche est pressurisée par un dispositif de pressurisation adapté avec lequel elle est en communication, comme décrit ci-après. La pressurisation induit le déplacement du piston 9 et par suite l'effort de plaquage des masselottes de contact 7 sur le tube T.

Les masselottes de contact 7, déjà évoquées, maintiennent les éléments sensibles 8 de la sonde au contact de la paroi interne du tube T ou crayon. Le matériau des masselottes 7 permet d'assurer la continuité thermique entre les éléments sensibles 8 de la sonde et le tube T. Si besoin, le matériau des masselottes 7 permet d'assurer l'isolation électrique entre ces mêmes éléments 8 et T. Le matériau des masselottes peut être avantageusement du diamant. Il peut également être constitué par du nitrure de bore ou du nitrure d'aluminium.

Tel qu'illustré, chaque masselotte comprend un évidement 700 dans lequel est logée l'extrémité libre 80 d'un élément sensible 8.

Chacune des masselottes 7 représentées a une forme de couronne cylindrique avec un évidement intérieur. Cette forme permet un contact de surface identique quel que soit le point de la surface S dont on cherche à mesurer la température. Dans les modes de réalisation particuliers de la figure 1 et des figures 2A et 2B, le gradient thermique axial est faible (inférieur à 10°C/m soit 0.01°C/mm), la réalisation d'un élément de contact cylindrique (masselotte 7) permet d'augmenter la surface de contact et, ainsi, de diminuer le temps de stabilisation en température de la masselotte 7 sans perturber significativement la précision de mesure.

Comme évoqué, la tête de mesure comprend également des éléments sensibles 8 distants entre eux et avec chacun une extrémité libre 80 qui s'étend parallèlement à l'axe longitudinal XX'. Tel qu'illustré, les éléments sensibles 8 sont sous la forme d'une pluralité de fils métalliques flexibles avec, pour chacun, une extrémité 81 fixée dans le corps creux principal 2 et une extrémité libre 80 recourbée vers l'extérieur.

La tête de mesure comprend enfin le piston 9 qui assure les fonctions de :
- transmission d'effort obtenu sur sa face supérieure par la mise en pression de la partie interne de la sonde So à la masselotte de contact 7 par l'intermédiaire des languettes de plaquage 5 et de leur butée 52,
- continuité de l'enceinte étanche pressurisée. Tel qu'illustré, le piston 9 et la butée 52 sont de formes tronconiques complémentaires.

Pour effectuer des mesures, le fonctionnement de la sonde So illustrée est le suivant. L'enceinte étanche est mise en pression par le dispositif de pressurisation à une pression prédéterminée. Cela provoque le déplacement axial du piston 9 fixé au soufflet 6 et ainsi, l'écartement radial concomitant des extrémités libres 50 des languettes 5 et de celles 80 des fils 8 jusqu'à une position correspondant à la mise en butée du piston 9 sur la butée 52. Puis, il y a une augmentation des efforts appliqués au piston 9 qui est transmise aux extrémités libres 80 des fils 8, par l'intermédiaire de la butée 52 et de la partie extérieure des languettes 5 qui en est solidaire, jusqu'à ce que la pression prédéterminée soit atteinte (figure 1). La pression prédéterminée est calibrée à l'avance en fonction des dimensions de la sonde, des dimensions internes du tube,... Quel que soit le point dont on cherche à mesurer la température T° le long du tube à inspecter, la pression prédéterminée est identique. En outre, il faut éviter d'avoir une pression telle qu'elle génère un matage entre les surfaces en contact (masselotte 7/surface interne S sur les figures).

L'effort de contact ainsi appliqué entre la masselotte de contact 7 et la surface interne S du tube T est constant et maitrisé : il est directement proportionnel à la pression prédéterminée délivrée par le dispositif de pressurisation en communication avec le corps creux. Ainsi, quel que soit le point de la surface interne S sur lequel on cherche à effectuer une mesure de température, l'effort de contact est constant et reproductible. En d'autres termes, selon l'invention, l'incertitude de mesure d'un point à un autre de la surface S est réduite grâce à la maitrise de l'effort de contact qui conduit à l'atténuation de la résistance thermique de contact.

Lors des déplacements de la sonde So dans le tube T, la pression dans l'enceinte étanche constituée par les corps creux 2, 3 et l'ensemble mobile soufflet 6/piston 9, est réduite, de manière à ce qu'il ne subsiste plus aucun contact entre les masselottes 7 et la surface interne S. D'ailleurs, selon l'invention, on veille à ce que le rapprochement des masselottes 7 entre elles soit suffisant lors du déplacement de la sonde So pour ne risquer aucun contact par inadvertance avec la surface S. On augmente ainsi la durée de vie des masselottes 7 et donc, de la sonde So.

Tel que représenté sur le mode de réalisation des figures 2A et 2B, la tête de mesure selon l'invention comprend tout d'abord un corps 1, réalisé de préférence en inox et sous la forme d'un cylindre creux. Il a essentiellement pour fonctions de réaliser un guidage et une garde du potentiel électrique.

Autour du corps 1 est disposée de manière coaxiale une bague 10, réalisée de préférence en céramique d'alumine. En bout du corps 1 est emmanchée une bague 11 qui réalise le blocage en translation de la bague 10. Cette bague 11 monobloc se substitue avantageusement aux deux pièces 3 et 4 du mode de réalisation de la figure 1.

Le soufflet 6 est emmanché sur cette bague 11. Cet emmanchement ainsi que celui de la bague 11 avec le corps creux 1 est réalisé de manière étanche par exemple par une technique de brasage. L'étanchéité ainsi obtenue est celle de la chambre de pressurisation formée avec le dispositif de pressurisation, l'intérieur du corps creux 1, celui de la bague 11 et celui du soufflet 6.

Comme montré sur les figures 2A et 2B, le piston 9 fait partie intégrante du soufflet 6, ce qui diminue le nombre de pièces par rapport au mode de réalisation de la figure 1. En outre, le passage des éléments sensibles (non représentés sur les figures 2A et 2B) est réalisé par les trous pratiqués à la périphérie des bague 11 (voir trous de passage 111) et bague 10 (les trous de passage en regard des trous 111 ne sont pas représentés). Ainsi, par rapport au mode de la figure 1, il n'y a pas d'étanchéité à réaliser entre les éléments sensibles et le piston 9 puisque ce dernier n'est pas traversé par lesdits éléments.

Dans le mode de réalisation des figures 2A et 2B, les butées 52 ou sièges de piston comprennent un trou débouchant 520 permettant d'effectuer un guidage supplémentaire des éléments sensibles sur une partie de leur hauteur. Il va de soi que selon ce mode de réalisation, aucun contact n'est possible entre la surface interne S du tube à inspecter T et lesdites butées 52. En outre, selon ce mode, une pièce de liaison supplémentaire 53 est prévue pour lier ensemble le siège de masselotte 70 et la butée 52. Le matériau de cette pièce supplémentaire 53 est judicieusement choisi pour éviter tout pont thermique entres ces deux pièces.

D'autres variantes peuvent être réalisées sans pour autant sortir du cadre de l'invention. Ainsi, un dispositif selon l'invention peut comporter les caractéristiques suivantes, prises individuellement ou en combinaison :
- bien qu'illustré avec une pluralité d'éléments sensibles 8 (au nombre de deux en vue de coupe), la sonde selon l'invention peut comprendre un seul élément sensible 8,
- bien qu'illustré en figure 1 sous forme de deux pièces distinctes fixées entre elles, selon le procédé de fabrication, l'ensemble languettes de plaquage 5/couronne 4 peut être une pièce monobloc,
- selon la nature, les dimensions et les matériaux constituant la sonde So, les masselottes 7 peuvent être omises du montage,
- la nature des éléments sensibles 8 de la sonde So peut être variable (thermocouples, thermomètres à résistance de Platine, thermistance etc....).

## Revendications

1. Dispositif de mesure de la température de la surface interne (S) d'un tube (T) d'axe longitudinal (XX'), comprenant :
- une sonde (So) comprenant une pluralité d'éléments sensibles (8) à la température, distants entre eux, chacun ayant leur extrémité libre (80) parallèle à l'axe (XX'),
- des moyens (5, 50, 52, 6, 7, 70) pour écarter radialement à l'axe l'extrémité libre (80)
des éléments sensibles (8),
- des moyens (5, 50, 52, 6, 7, 70) pour appliquer un effort déterminé sur l'extrémité libre de l'(des) élément(s) sensible(s) écarté(s) radialement, l'effort de contact étant constant et reproductible, quel que soit le point de la surface interne S sur lequel on cherche à effectuer une mesure de température,
dans lequel la sonde (So) comprend un corps creux (2, 3) charactérisé en ce que les éléments sensibles (8) sont sous la forme d'une pluralité de fils métalliques flexibles avec, pour chacun, une extrémité (81) fixée dans le corps creux et une extrémité libre (80) et recourbée vers l'extérieur,
et les moyens d'écartement des fils métalliques flexibles (8) et d'application d'effort déterminé à leur extrémité libre (81) comprennent :
● une plaque (9) de largeur L, formant piston à travers lequel passent les fils (8),
● un soufflet (6) fixé au piston (9) et au corps creux (2, 3) en formant avec ceux-ci une enceinte étanche adaptée pour être en communication avec un dispositif de pressurisation,
● des languettes flexibles (5) avec, pour chacune, une extrémité (51) fixée au corps creux (1) de manière à être distantes entre elles d'une distance L, et une extrémité libre (50) solidaire extérieurement de l'extrémité libre (80) d'un des fils métalliques flexibles (8) et intérieurement d'une butée (52).

2. Dispositif selon la revendication 1, dans lequel la plaque formant piston (9) et la butée (52) sont de formes tronconiques complémentaires.

3. Dispositif selon l'une quelconque des revendications précédentes, comprenant une masselotte (7) comprenant un évidement (700) dans lequel est logée l'extrémité libre (80) d'un élément sensible (8), le matériau de la masselotte (7) assurant la continuité thermique entre une pièce (T) en contact extérieur avec elle et l'élément sensible.

4. Dispositif selon la revendication 3, dans lequel le matériau de la masselotte assure en outre l'isolation électrique entre la pièce (T) et l'élément sensible (8).

5. Procédé de mesure de la température de la surface interne (S) de tube (T) d'axe longitudinal (XX') avec un dispositif de mesure selon l'une des revendications 1 à 4, dans lequel on réalise les étapes suivantes :
a) on vient écarter au moins un élément (8) sensible à la température, d'une sonde (So), radialement à l'axe (XX'), de manière à le(s) mettre en contact contre la surface interne (S) du tube,
b) on augmente l'effort de contact appliqué entre l'(es) élément(s) sensible(s) (8) de la sonde et la surface interne jusqu'à ce qu'il atteigne une valeur déterminée en tout point de ladite surface, l'effort de contact étant constant et reproductible, quel que soit le point de la surface interne S sur lequel on cherche à effectuer une mesure de température.

6. Procédé selon la revendication 5, dans lequel, lorsqu'on déplace la sonde à l'intérieur du tube, on relâche l'effort appliqué par l'(es) élément(s) sensible(s) contre la surface interne du tube.

7. Procédé selon la revendication 6, dans lequel le relâchement de l'effort appliqué est tel qu'il ne subsiste aucun contact entre l'(es) élément(s) sensible(s) de la sonde et la surface interne du tube.

8. Utilisation d'un dispositif selon l'une des revendications 1 à 4 pour mesurer la température de surface interne (S) de tubes (T) d'installation expérimentales simulant par effet joule direct le dégagement de puissance des crayons combustibles nucléaires.

## Patentansprüche

1. Einrichtung zur Messung der Temperatur der Innenfläche (S) von einem Rohr (T) mit einer Längsachse (XX'), umfassend:
- eine Sonde (So), umfassend eine Mehrzahl von für die Temperatur empfindlichen Elementen (8), die voneinander entfernt sind, wovon jedes ein freies Ende (80) aufweist, welches parallel zu der Achse (XX') ist,
- Mittel (5, 50, 52, 6, 7, 70), um das freie Ende (80) der empfindlichen Elemente (8) von der Achse radial zu beabstanden,
- Mittel (5, 50, 52, 6, 7, 70), um eine bestimmte Kraft auf das freie Ende von dem/den radial beabstandeten empfindlichen Element/Elementen anzuwenden, wobei die Kontaktkraft konstant und reproduzierbar ist, unabhängig von dem Punkt der Innenfläche S, an welchem eine Temperatur-Messung durchgeführt werden soll,
wobei die Sonde (So) einen Hohlkörper (2, 3) umfasst **dadurch gekennzeichnet, dass** die empfindlichen Elemente (8) in Form von einer Mehrzahl von flexiblen metallischen Fäden vorliegen, jeweils mit einem Ende (81), das in dem Hohlkörper fixiert ist, und mit einem freien Ende (80) das nach außen hin gekrümmt ist, und
die Mittel zum Beabstanden der flexiblen metallischen Fäden (8) und zur Anwendung der bestimmten Kraft auf deren freies Ende (81) umfassen:
- eine Platte (9) mit Breite L, welche einen Kolben bildet, durch welchen die Fäden (8) verlaufen,
- einen Balg (6), der an dem Kolben (9) und an dem Hohlkörper (2, 3) befestigt ist, wobei er mit diesen einen dicht abgeschlossenen Bereich bildet, der dazu angepasst ist, in Verbindung mit einer Druckquelle zu stehen,
- flexible Zungen (5) jeweils mit einem Ende (51), das an dem Hohlkörper (1) so befestigt ist, dass sie voneinander mit einem Abstand L beabstandet sind, und mit einem freien Ende (50), das außen mit dem freien Ende (80) von einem der flexiblen metallischen Fäden (8) und innen mit einem Anschlag (52) zusammenhängt.

2. Einrichtung nach Anspruch 1, wobei die einen Kolben bildende Platte (9) und der Anschlag (52) komplementäre Kegelstumpf-Formen aufweisen.

3. Einrichtung nach einem der vorhergehenden Ansprüche, umfassend ein Ausgleichsgewicht (7), das eine Aushöhlung (700) umfasst, in welcher das freie Ende (80) von einem empfindlichen Element (8) aufgenommen ist, wobei das Material des Ausgleichsgewichts (7) die thermische Kontinuität zwischen einem Stück (T) im äußeren Kontakt damit und dem empfindlichen Element sicherstellt.

4. Einrichtung nach Anspruch 3, wobei das Material des Ausgleichsgewichts weiterhin die elektrische Isolierung zwischen dem Stück (T) und dem empfindlichen Element (8) sicherstellt.

5. Verfahren zur Messung der Temperatur der Innenfläche (S) von einem Rohr (T) mit einer Längsachse (XX'), vermittels einer Messeinrichtung gemäß einem der Ansprüche 1 bis 4, wobei die folgenden Schritte durchgeführt werden:
a) wenigstens ein für die Temperatur empfindliches Element (8) von einer Sonde (So) wird radial von der Achse (XX') beabstandet, so dass es/sie in Kontakt mit der Innenfläche (S) von dem Rohr gebracht wird/werden,
b) die zwischen dem/den empfindlichen Element/Elementen (8) der Sonde und der Innenfläche angelegte Kontaktkraft wird vergrößert, bis sie einen bestimmten Wert an jedem Punkt der Oberfläche erreicht, wobei die Kontaktkraft konstant und reproduzierbar ist, unabhängig von dem Punkt der Innenfläche S, an welchem eine Temperatur-Messung durchgeführt werden soll.

6. Verfahren nach Anspruch 5, wobei, wenn die Sonde im Inneren des Rohrs verlagert wird, die durch das/die empfindliche/empfindlichen Element/Elemente gegen die Innenfläche des Rohrs angewendete Kraft verringert wird.

7. Verfahren nach Anspruch 6, wobei das Verringern der angewendeten Kraft derart ist, dass überhaupt kein Kontakt zwischen dem/den empfindlichen Element/Elementen der Sonde und der Innenfläche des Rohrs übrig bleibt.

8. Verwendung einer Einrichtung nach einem der Ansprüche 1 bis 4, um die Temperatur der Innenfläche (S) von Rohren (T) für experimentelle Aufbauten zu messen, die durch direkten Joule-Effekt die Leistungsabgabe von nuklearen Brennstäben simulieren.

## Claims

1. Device for measuring the temperature of the internal surface (S) of a pipe (T) of a fore-and-aft axis (XX') comprising:
- a probe (So) comprising a plurality of temperature-sensitive element (8), distant from each other, each having their free end (80) parallel to the axis (XX'),
- means (5, 50, 52, 6, 7, 70) for moving away radially with respect to the axis the free end (80) of the sensitive elements (8),
- means (5, 50, 52, 6, 7, 70) for applying a defined force to the free end of the sensitive element(s) moved away radially, the contact force being constant and reproducible, whatever the point of the internal surface S on which it is aimed to carry out a temperature measurement,
wherein the probe (So) comprises a hollow body (2, 3) **characterised in that** the sensitive elements (8) are in the form of a plurality of flexible metal wires with, for each, one end (81) fixed in the hollow body and one end (80) free and curved towards the exterior, and
the means of moving away the flexible metal wires (8) and of application of defined force to their free end (81) comprise:
● a plate (9) of width L, forming a piston through which pass the wires (8),
● a bellows (6) fixed to the piston (9) and to the hollow body (2, 3), which with it form a sealed enclosure adapted to be in communication with a pressurisation device,
● flexible splines (5) with, for each, one end (51) fixed to the hollow body (1) so as to be separated from each other by a distance L, and one free end (50) integral externally with the free end (80) of one of flexible metal wires (8) and internally with a stop (52).

2. Device according to claim 1, wherein the plate forming piston (9) and the stop (52) are of complementary tapered shapes.

3. Device according to any of the preceding claims, comprising a counterweight (7) comprising a hollowing (700) in which is lodged the free end (80) of a sensitive element (8), the material of the counterweight (7) ensuring the thermal continuity between a part (T) in external contact with it and the sensitive element.

4. Device according to claim 3, wherein the material of the counterweight moreover ensures the electrical insulation between the part (T) and the sensitive element (8).

5. Method of measuring the temperature of the internal surface (S) of a pipe (T) of fore-and-aft axis (XX'), with a device according to any of the preceding claims, wherein the following steps are carried out:
a) at least one temperature-sensitive element (8) is moved away from a probe (So), radially with respect to the axis (XX'), so as to bring the temperature-sensitive element(s) into contact against the internal surface (S) of the pipe,
b) the contact force applied between the sensitive element(s) (8) of the probe and the internal surface is increased until it reaches a defined value at any point of said surface, the contact force being constant and reproducible, whatever the point of the internal surface S on which it is aimed to carry out a temperature measurement.

6. Method according to claim 5, wherein, when the probe is displaced inside the pipe, the force applied by the sensitive element(s) against the internal surface of the pipe is relaxed.

7. Method according to claim 6, wherein the relaxing of the force applied is such that no contact remains between the sensitive element(s) of the probe and the internal surface of the pipe.

8. Use of a device according to one of claims 1 to 4 for measuring the temperature of the internal surface (S) of pipes (T) of experimental installation simulating by direct joule effect the release of power from nuclear fuel pencils.
